## Europäisches Patentamt

## European Patent Office

## Office européen des brevets

(11) Veröffentlichungsnummer: **0 082 815**
**B2**

(12) # NEUE EUROPÄISCHE PATENTSCHRIFT

(45) Veröffentlichungstag der neuen Patentschrift:
06.02.91

(51) Int. Cl.⁵: **B 07 B 9/00,** B 03 B 9/06,
**B 07 B 1/24**

(21) Anmeldenummer: 82810532.0

(22) Anmeldetag: 08.12.82

(54) **Verfahren zum Ausscheiden wenigstens einer Fraktion aus Kommunalmüll und Vorrichtung zur Durchführung des Verfahrens.**

(30) Priorität: 17.12.81 CH 8065/81

(43) Veröffentlichungstag der Anmeldung:
29.06.83 Patentblatt 83/26

(45) Bekanntmachung des Hinweises auf die
Patenterteilung:
06.02.91 Patentblatt 91/06

(45) Bekanntmachung des Hinweises auf die
Entscheidung über den Einspruch:
28.05.86 Patenblatt 86/22

(84) Benannte Vertragsstaaten:
BE DE NL SE

(56) Entgegenhaltungen:
EP-A-0 008 621    FR-A-2 307 588
DE-A-2 436 543    GB-A-1 498 767
DE-A-2 559 160    GB-A-2 045 113
DE-A-2 939 743

Zeitschrift "Müll und Abfall", Heft 7/1981, Seiten
208-211, O.TABASAVAN: "Schwermetalle in
kommunalen Abfällen und Konsequenzen für
die Kompostierung"

(73) Patentinhaber: Gebrüder Bühler AG
CH-9240 Uzwil (CH)

(72) Erfinder: Breitenmoser, Bruno
Rotschürstrasse 9
CH-9500 Wil (CH)
Erfinder: Wyss, Franz-Joachim
Sonnenbergstrasse 9a
CH-9240 Uzwil (CH)
Erfinder: Hofer, Hermann
Eggstrasse 9a
CH-9244 Niederuzwil (CH)

(74) Vertreter: Dipl.-Phys.Dr. Manitz Dipl.-Ing., Dipl.-
W.-Ing. Finsterwald Dipl.-Ing. Grämkow Dipl.-
Chem.Dr. Heyn Dipl.-Phys. Rotermund
Morgan, B.Sc.(Phys.) Robert-Koch-Strasse 1
D-8000 München 22 (DE)

Courier Press, Leamington Spa, England.

**Beschreibung**

Die Erfindung bezieht sich auf ein Verfahren zum Ausscheiden wenigstens einer Fraktion aus Kommunalmüll sowie auf eine Vorrichtung zur Durchführung des Verfahrens.

Verfahren zur Bearbeitung von Müll, bei denen eine oder mehrere Komponenten zur Wiederverwertung bestimmt sind, gibt es bereits in zahlreichen Varianten. Im Hinblick auf die zunehmende Kostensteigerung beim Heizöl und bei anderen Energiequellen gewinnt auch die Wiederverwertung von Müll als Brennstoff zunehmend an Bedeutung. Bekanntlich enthält insbesondere Kommunalmüll einen grossen. Anteil an brennbaren Bestandteilen wie z.B. Papier, Karton, Holz usw. Die Schwierigkeit bei der Gewinnung von Brennstoff aus Müll besteht jedoch darin, dass die brennbaren Komponenten gemischt sind mit unbrennbaren, übergrossen und teilweise sogar einen hohen Feuchtigkeitsgrad aufweisenden anderen Komponenten wie z.B. Speisereste, Sand, Autoreifen, usw.

Ein weiteres Problem besteht darin, dass der Kommunalmüll in zunehmendem Masse Schwermetalle enthält, bei denen die Gefahr besteht, dass sie in den Kompost oder nach Wiederverwertung des Müll als Brennstoff über die Asche in den Erdboden gelangen und diesen kontaminieren. Deshalb wurde diesen Schwermetallen, wie Cadmium, Blei, Quecksilber und Zink, aber auch Chrom, Nickel, Kupfer usw., in letzter Zeit erhöhte Aufmerksamkeit zugewendet, wobei mancherorts entsprechende Vorschriften hinsichtlich des Maximalgehaltes an solchen Schwermetallen erlassen wurden. Daher gilt es, solche Schwermetalle aus dem kommunalmüll auszusondern.

Untersuchungen der Anmelderin haben gezeigt, dass verschiedene Müllkomponenten besonders hohe Anteile an solchen Schwermetallen besitzen, so dass durch Ausscheiden dieser Komponenten eine weitgehende Befreiung des Bearbeitungsproduktes von Schwermetallen möglich ist. So sind die Komponenten "Gummi und Leder", "Metalle", "Kunstoffe" (hier vor allem PVC) die Hauptträger an Cadmium, Chrom, Blei und Zink. Auch Lacke und Batterien verunreinigen stark durch hohen Zink-, Chrom- und Bleigehalt. Was aber gerade im Zusammenhang mit der oben erwähnten Gewinnung von Brennstoff von Interesse ist, ist die Feststellung, dass im Tiefdruckverfahren bedrucktes Papier zwar an sich einen hohen Brennwert besitzt, anderseits aber einen erhöhten Blei- und Zinkgehalt aufweist.

In diesem Zusammenhang liegt eine weitere Schwierigkeit im Transport des Mülls zum Ort der Verarbeitung. Bereits nach zwei Tagen beginnt beim Müll ein Fermentationsprozess, der die Gewinnung brennbarer Komponenten erschwert. Bei längerer Lagerung findet ausserdem eine Durchfeuchtung der gesamten Müllmasse statt, so dass die ausgeschiedenen brennbaren Komponenten nachträglich wieder getrocknet werden müssen. Insbesondere in grösseren Gemeinden wird der Müll von kleineren Sammelfahrzeugen zu sogenannten Transfer-Stationen gefahren. In diesen Transfer-Stationen wird der Müll einer bestimmten Region in grosse Container gepresst, welche dann per Lastwagen oder per Bahn zum Verarbeitungsort gefahren werden. Durch diese mehrfache Umschichtung des Mülls wird ersichtlicherweise die Fermentation und Durchfeuchtung noch gefördert. Durch diese Fermentation wird aber nicht nur die Gewinnung brennbarer Komponenten erschwert, sondern auch das Auslesen schwermetallhaltiger Komponenten, für welche Erschwerung nicht nur die Fermentation alleine, sondern überdies die mehrfache Umschichtung verantwortlich ist, die die Durchmischung und damit auch die Verunreinigung anderer Komponenten mit Schwermetallen fördert.

Durch die CH-PS 331, 132 ist bereits ein Verfahren zur Aufbereitung von Stadtmüll bekanntgeworden, bei dem der Müll zunächst gesiebt, sodann zerkleinert und hernach zu Formlingen gepresst wird. Vor oder nach der Pressung ist ausserdem ein Trockmnungsprozess vorgesehen. Dieses Verfahren hat den Nachteil, dass durch die Zerkleinerung der ausgesiebten Müllfraktion eine intensive Durchmischung und somit auch Durchfeuchtung des Mülls stattfindet. Ein Verbrennen der Presslinge unmittelbar nach dem Pressvorgang ist daher nicht möglich. Ausserdem gelangen durch dieses Verfahren auch feine Fraktionen wie z.B. Sand in die Presslinge, was den Heizwert ersichtlicherweise stark reduziert.

Auch andere Verfarhen, die mit einer Vorzerkleinerung arbeiten, bedingen durch die dabei erfolgende Durchmischung und Durchfeuchtung einerseits eine Trocknung, die verhältnismässig teuer ist, und führen zu einer verschlechterten Auslese der in Frage kommenden Komponenten.

Anderseits wurde bisher vielfach das Vorurteil vertreten (vgl. EP-A1-8 621), es sei im allgemeinen nicht möglich, mit Hilfe einer Siebmaschine eine Sortierung von Stoffgemischen zu erreichen. Dies ist auch der Grund, warum zusätzlich selektive wirksame Zerkleinerungsvorrichtungen bei dieser bekannten Siebtrommel vorgesehen sind, denn der erste Vorgang sollte jedenfalls ein Zerkleinerungsvorgang sein.

Dieser Gedanke findet sich auch in der DE-A-2 436 543, die zur Erzielung eines Pralleffektes zwecks Zerkleinerung einen polygonen Querschnitt aufweist. Daher fällt dort das Material erst durch die die Sieblöcher, wenn es durch das Prallen eine entsprechende Feuchtigkeit erreicht hat. Die Polygontrommel weist zwei Siebabschnitte mit Lochplatten auf, deren Löcher in jedem Siebabschnitt einen anderen Durchmesser besitzen. Solche zweiteiligen Siebtrommeln mit Löchern unterschiedlicher Grösse in zwei Siebabschnitten sind auch in anderer Ausführung bekannt, wobei die Löcher jeweils durch die Längs- und in Umfangsrichtung der Trommel, verlaufende Stege begrenzt (GB-A-2 045 113, FR-A-2 307 588).

Die Erfindung liegt — im Oberbegriff des Anspruches 1 ausgehend von der DE-A-2 436 543

— die Aufgabe zugrunde, ein Verfahren zu schaffen, bei dem auf einfache und trennscharfe Weise aus dem Müll wenigstens eine Fraktion ausgeschieden werden kann, die entweder unmittelbar ohne jede weitere Bearbeitung in einer konventionellen Feuerung verbrannt und/oder als Träger von Schwermetallen ausgeschieden werden kann.

Hierzu wird einerseits — unter Vorraussetzung eines Verfahrens zum Ausscheiden wenigstens einer Fraktion aus Müll, bei dem der Müll (a) einem ersten Siebvorgang zum Ausscheiden einer feinen Fraktion zugeführt wird, sodann (b) einem zweiten Siebvorgang zum Ausscheiden einer gröberen Fraktion und zum Ausscheiden von übergrossen Müllteilen zugeführt wird und (c) beide Siebvorgänge in einer in wenigstens zwei Siebabschnitten unterteilten, rotierenden Siebtrommel erfolgen — erfindungsgemäss vorgeschlagen, dass aufgrund des Resultates einer Müllanalyse zum Feststellen der die auszuscheidende Fraktion enthaltenden Trägerkomponente des Mülls eine Selektion dieser Trägerkomponente unmittelbar nach Auslieferung durch Sammelfahrzeuge ohne Vorbehandlung des Mülls erfolgt.

Zwar ist es aus der DE-A-2 939 743 an sich bereits bekannt geworden, ohne Vorbehandlung eine Siebung vorzunehmen, doch geht es dort um ein Rückgewinnungsverfahren, bei dem es selbstverständlich nicht sinnvoll ist, die einer Wiederverwertung zuzuführenden Materialien erst zu zerkleinern. Von einer Selektion nach einer Trägerkomponente ist daher dort keine Rede.

Dagegen wird nach diesem erfindungsgemässen Verfahren eine Sortierung nach den Trägermaterialien vorgeschlagen, die — wie statistisch festgestellt wurde — in ihrem ursprünglichen Zustande vorgegebene Grössen bestizen, was eine Sortierung nach statischen Prinzipien möglich macht. Eine deratige Sortierung ist leichter vorzunehmen, als die Selektion nach den chemischen Eigenschaften der gesuchten vorbestimmten Fraktion und besitzt aufgrund der vorhergehenden Analyse eine hohe Genauigkeit und Trennschärfe. Selbstverständlich ist es dabei lediglich erforderlich, dass vom Resultat einer — allenfalls nur einmal gemachten — Analyse ausgegangen wird, und diese braucht nicht zwingend vor jedem Siebvorgang wiederholt werden.

Wie schon erwähnt, beschreibt die DE-A-2 436 543 eine Vorrichtung mit einer antreibbaren, einen ersten und einen zweiten Siebabschnitt unterschiedlicher Lochgrössen aufweisenden Siebtrommel, wobei im ersten Siebabschnitt — gesehen in Materialdurchflüssrichtung — die Lochgrösse geringer als im zweiten ist und im ersten Siebabschnitt ein Lochsieb aus wenigstens einer mit Löchern versehenen Platte vorgesehen ist. Hiervon ausgehend wird eine zur Durchführung der erfindungsgemässen Verfahren besonders geeignete Vorrichtung dadurch geschaffen, dass das Lochsieb mit dem ersten Siebabschnitt endet, und dass im zweiten Siebabschnitt die Löcher durch in Längs- und in Umfangsrichtung der Trommel verlaufende Stege begrenzt sind. Der Grund für diese Kombination von Lochsieb und Rostsieb liegt darin, dass die für die Zwecke der Erfindung oft vorzusehenden geringen Lochgrössen mit Hilfe einer rostartigen Konstruktion nur schwer zu erreichen sein wird bzw. bei Verwendung eines entsprechenden Maschensiebes die Wandstärke zwangsläufig so gering werden muss, dass das Sieb einem raschen Verschleiss ausgesetzt ist. Deshalb soll dieser Abschnitt einfacher als Lochsieb ausgebildet sein, wodurch sicher einerseits leicht die erforderlichen Lochdurchmesser erzielen lassen und anderseits auch eine entsprechende Wandstärke zur Vermeidung häufiger Reparaturen. Der zweite Siebabschnitt mit den verhältnismässig grossen Lochquerschnitten wird aber zweckmässig nach Art eines Rostes aus in Längs- und im Umfangsrichtung der Trommel verlaufenden Stegen hergestellt, weil diese Stege bei einem derartig grossen Lochquerschnitt leicht in der erforderlichen Stärke hergestellt werden können, wogegen Bleche bei solchen Lochquerschnitten und entsprechend enger Anordnung dieser Löcher sehr stark geschwächt würden, wogegen bei weit auseinanderliegenden Löchern die Kapazität des Siebes empfindlich verringert würde. Die Folge wäre die Notwendigkeit einer Verlängerung des zweiten Siebabschnittes und damit einer Verteuerung der Konstruktion.

Weitere Einzelheiten ergeben sich anhand der nachfolgenden Beschreibung von in der Zeichnung schematisch dargestellten Ausführungsbeispielen. Es zeigen:

Figur 1 eine schematische Darstellung des erfindungsgemässen Verarbeitungsprozess;

Figur 2 einen Längsschnitt durch eine erfindungsgemässe Vorrichtung;

Figur 3 einen Querschnitt durch den zweiten Siebabschnitt gemäss Fig. 2;

Figur 4 eine Teilansicht einer Befestigung der Siebelemente;

Figur 5 eine abgewandeltes Ausführungsbeispiel eines Siebelementes;

Figur 6 verschiedene Ausführungen des erfindungsgemässen Verfahrens in einer grösseren Anlage.

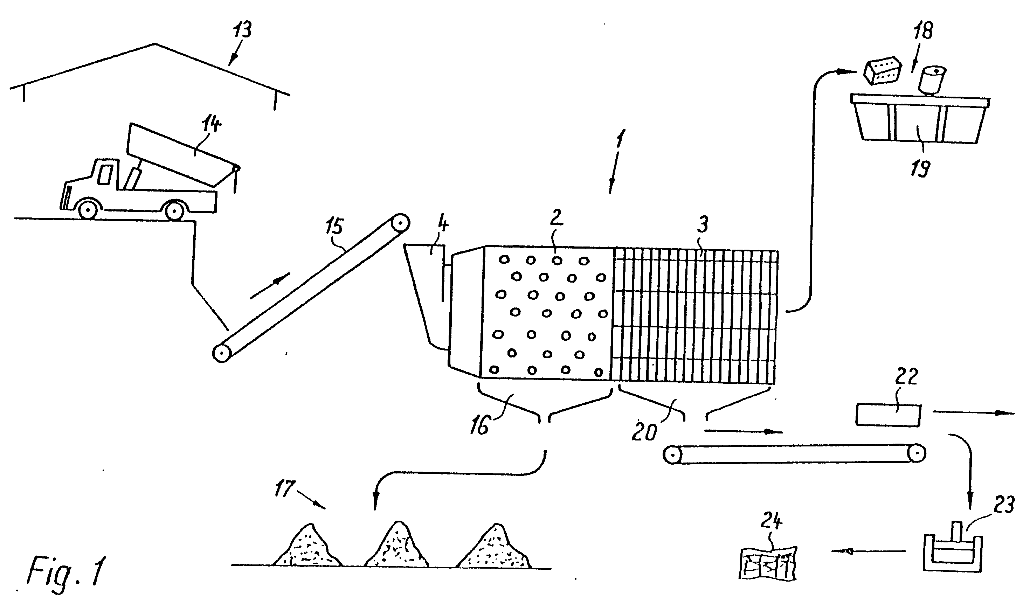

Wie in Fig. 1 dargestellt, wird auf einer Transfer-Station 13 der Kommunalmüll mit relativ kleinen Sammelfahrzeugen 14 angeliefert und entladen. Ein Förderband 15 befördert den frischen Müll unmittelbar in die Einlassöffnung 4 einer Siebtrommel 1. Die Siebtrommel 1 weist einen Siebabschnitt 2 auf, der als herkömmliches Lochsieb ausgebildet ist. Der Druchmesser der Lochung beträgt dabei etwa 40 bis 80 mm, vorzugsweise etwa 60 mm. In diesem ersten Siebabschnitt wird eine relativ feine Müllfraktion 16 ausgeschieden. Diese Müllfraktion enthält auch einen grossen Anteil von 90 bis 95% der vegetabilen Stoffe und kann daher beispielsweise auf einer Rottmiete 17 zu Kompost weiterverarbeitet werden. Diese Fraktion kann jedoch auch anderweitig verwertet oder auf einer Deponie abgelagert werden. Gerade der Umstand, dass keine eigentliche Zerkleinerung des Mülls erfolgt, verhindert, dass eine zu grosse Durchfeuchtung auch der brennbaren Bestandteile stattfindet. Uebergrosse Müllbestandteile 18 werden im zweiten Siebabschnitt 3 ausgeschieden, Diese Bestandteile wie z.B. Dosen, Autoreifen, Kisten usw. werden in Container 19 gefüllt und entweder einem weiteren Ausleseprozess unterworfen oder direkt auf die Deponie gegeben.

Der Siebdurchfall des zweiten Siebabschnitt 3 besteht aus einer besonders wertvollen brennbaren Fraktion 20. Diese Fraktion wird auf ein Förderband 21 gegeben und in an sich bekannter Weise mit einem Magnetabscheider 22 von metallischen Gegenständen gereinigt. Anstelle des Magnetabscheiders könnte auch eine andere Vorrichtung zum Ausscheiden schwerer metallischer Bestandteile verwendet werden. Je nach den Umständen kann die brennbare Fraktion mit einer Presse 23 zu Ballen 24 gepresst werden. Ein Pressen zu Ballen ist besonders dann angezeigt, wenn die brennbare Fraktion über eine grössere Distanz transportiert oder gelagert werden muss.

Der besondere Vorteil des Verfahrens liegt darin, dass es aufgrund des minimalen apparativen Aufwands direkt auf den Transfer-Stationen durchgeführt werden kann. Die brennbaren Bestandteile können nicht nur in einem speziellen Müllverbrennungsofen verbrannt werden. Vielmehr erhält man umittelbar einen ofenfertigen Brennstoff, der für Industriefeuerungen verwendet werden kann. Auf diese Weise kann der Müll nicht nur in gemeindeeigenen Müllverbrennungsanalagen verwertet werden. Der gewonnene Brennstoff kann an private Abnehmer verkauft werden, was für die Gemeinde wirtschaftlich vorteilhafter sein kann als die aufwendige Verarbeitung in einer eigenen Grossanlage.

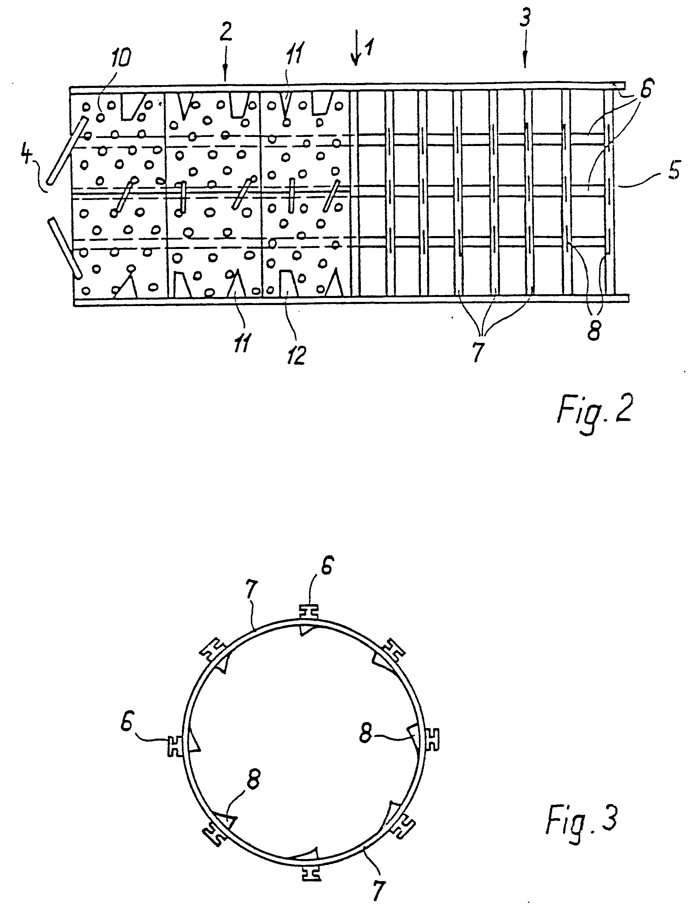

In den Fig. 2 and 3 ist eine erfindungsgemässe Siebtrommel schematisch dargestellt. Die parallel zur Drehachse verlaufenden Trägerelemente 6 bilden eine Art Gerüst für die übrigen Bauteile der Siebtrommel. Der erste Siebabschnitt 2 besteht aus einem Lochsieb, welches in einzelnen Siebplatten 10 auf den Trägerelementen befestigt ist. An der Einlassöffnung 4 können Einzugschaufeln 25 vorgesehen sein, welche die Müllmasse ins Innere der Trommel befördern. Im Innern des erstein Siebabschnitts sind Reisselemente 11 und Förderelemente 12 angeordnet. Die Reisselemente zerreissen und lockern zusammengeballten Müll und öffnen beispielsweise auch Säcke, Gebinde usw. Die Förderelemente 12 transportieren den Müll gegen den zweiten Siebabschnitt 3. Vorzugsweise hat die gesamte Siebtrommel in Durchflussrichtung des Mülls eine Neigung von ca. 3 bis 5°.

Im zweiten Siebabschnitt 3 sind mehrere Siebelemente 7 quer zur Drehachse der Trommel auf den Trägerelementen 6 befestigt. Die Siebelemente bestehen vorzugsweise aus einzelnen Segmenten z.B. in der Form gebogener Flacheisen. In bestimmten Anwendungsfällen ist es jedoch auch denkbar, die Siebelemente der Trägerelemente 6 sind auf den Siebelementen 7 Abweiselemente 8 befestigt. Diese bestehen vorzugsweise aus abgeschrägten Blechen, welche auf den Siebelementen angeschweisst sind. Die Abweiselemente verhindern ein Umwickeln der Trägerelemente durch Müllbestandteile und dadurch ein Verstopfen der Sieböffnungen des zweiten Siebabschnittes.

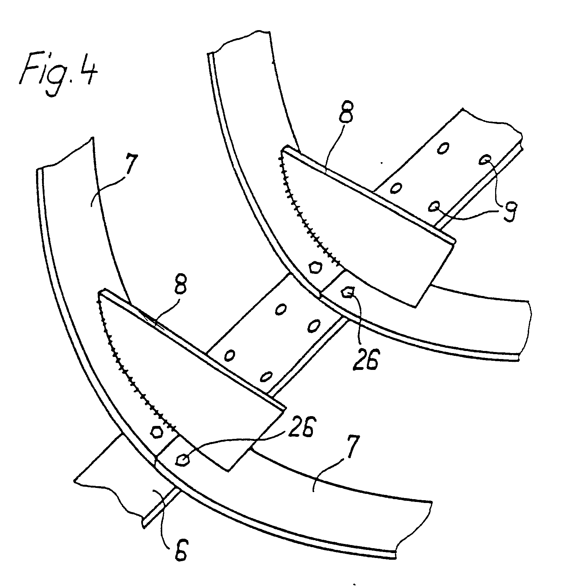

Die Sieböffnungen des zweiten Siebabschnitts können durch Längsverschiebung der Siebelemente 7 auf den Trägerelementen 6 verändert werden. Wie in Fig. 4 dargestellt, sind auf der Innenseite der Trägerelemente 6 in regelmässigen Abständen Gewindelöcher 9 angeordnet. In diesen Gewindelöchern sind die Siebelemente 7 mittels Schrauben 26 befestigt. Ersichtlicherweise können dadurch die Distanzen zwischen den einzelnen Siebelementen beliebig verändert werden. Eine Feineinstellung der Distanz könnte beispielsweise durch das Anbringen von Langlöchern in den Siebelementen erreicht werden.

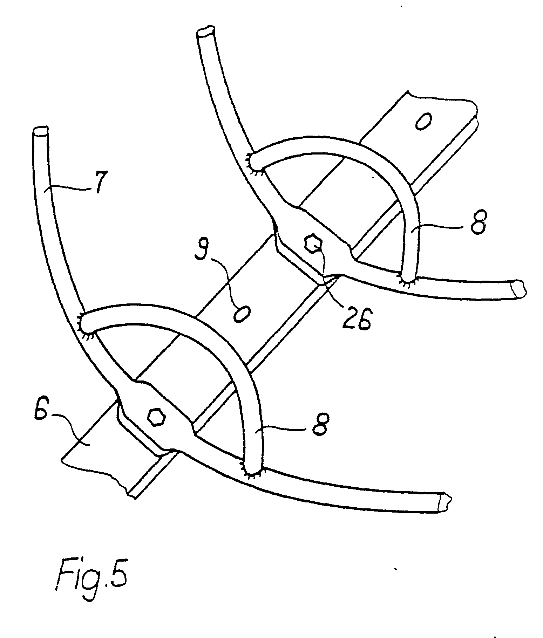

Fig. 5 zeigt eine Teilansicht mit abgewandelten Siebelementen 7. Diese sind nicht aus Flachsondern aus Rundeisen gefertigt, welche lediglich im Bereich der befestigung abgeflacht sind. Die abweiseelemente 8 bestehen ebenfalls aus gebogenen Rundeisen, welche sich über den ganzen Bereich der Trägerelemente wölben.

Die nicht dargestellten Bauteile der Siebtrommel, wie beispielsweise der Antrieb oder der Aussenmantel, sind dem Fachmann bekannt und werden daher hier nicht beschrieben. Das gleiche gilt auch für die Dimensionierung der einzelnen teile sowie für die Wahl der geeigneten Materialien.

Im folgenden ist ein Beispiel eines erfindungsgemässen Verfahrens zahlenmässig dargestellt:

Eine Menge von 100 t Kommunalmüll wird nach einer Zeit von ca. 5 Stunden nach dem Aufsammeln verarbeitet. Bei einem Lochdurchmesser von 50 mm des ersten Siebes und einer Distanz zwischen den Siebelementen des zweiten Siebes von 120 mm ergeben sich folgende Gewichsanteile:

1. Siebvorgang 30-35% mit einem Feuchtigkeitsgehalt von 45%.

2. Siebvorgang 45-50% brennbare Fraktion mit einem Feuchtigkeitsgehalt von 25%.

3. Ausstoss übergrosse Teile 20%.

4. Metall 4 000 kg.

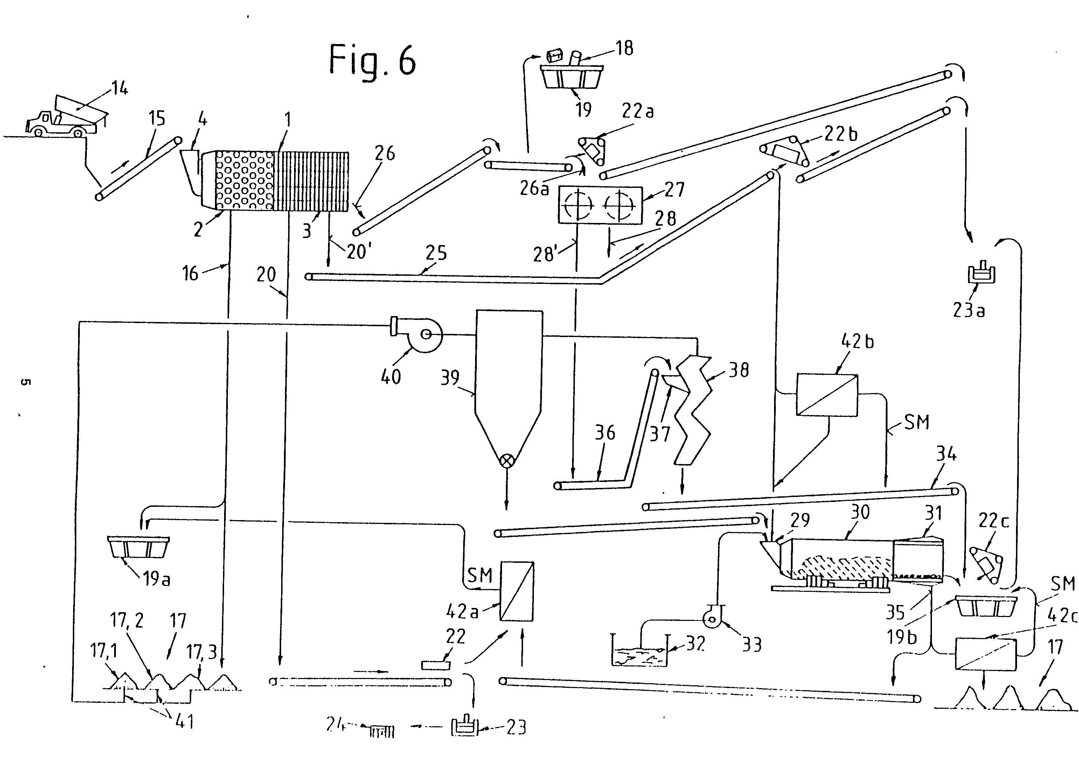

Obwohl, wie eingags bereits erwähnt, mit Hilfe des erfindungsgemässen Verfahrens und der Vorrichtung hiefür die Müllverarbeitung bereits auf der Stufe der Transfer-Stationen erfolgen kann, ist die Erfindung jedoch keineswegs darauf beschränkt. Fig. 6 veranschaulicht das Schema einer grösseren Anlage, in der das erfindungsgemässe Verfahren in verschiedenen Ausführungsvarianten verwirklicht werden kann. Wie in Fig. 6 links oben ersochtlich, bringen wiederum Sammelfahrzeuge 14 den Kommunalmüll heran, und das Förderband 15 fördert den Müll in die Einlassöffnung 4 der Siebtrommel 1, die in der oben beschriebenen Weise ausgestattet ist. Daher ergibt sich im ersten sich im ersten Siebabschnitt 2 wiederum die verhältnismässig feine Müllfraktion 16, die je nach der Gegend zwar im allgemeinen einen hohen Anteil an vegetabilen Stoffen aufweist, gelegentlich aber auch einen grossen Prozentsatz an Sand u. dgl. Es hat sich herausgestellt, dass der Anteil an Sand und unverrottbaren bzw. unverbrennbaren Komponenten besonders hoch ist, wenn der erste Siebabschnitt einen Lochdurchmesser von etwa 15 mm (± 10%) besitzt, wogegen mit einem Lochdurchmesser von maximal 80 mm die erhaltene Fraktion 16 einen hohen Anteil an verrottbaren Substanzen enthält (in denen je nach der gewünschten Kompostart der Sandanteil keine Rolle spielt), aber kaum Brennbares. Im letzteren Fall kann also die Fraktion 16 der Rottemiete 17 zugefürt werden, im ersteren Fall kann damit ein Container 19a zur Ablagerung auf einer Deponie beladen werden.

Gewünschtenfalls kann daher der erste Siebvorgang noch unterteilt werden, indem man die Siebtrommel 1 in drei (oder mehr) Abschnitte unterteilt, wobei im ersten Abschnitt mit einem Lochdurchmesser von 15 mm der Sand u. dgl. ausgeschieden wird, wogegen im zweiten Abschnitt mit einem Lochdurchmesser zwischen 40 und 80 mm die verrottbaren Bestandteile, selbstverständlich in einem höheren Prozentsatz als bei ununterteiltem ersten Siebabschnitt, ausfallen und der Rottemiete 17 zugeführt werden können.

Auch für die aus dem zweiten Siebabschnitt 3 kommende Fraktion 20 bzw. 20' ergeben sich zwei Möglichkeiten, wobei entweder die Fraktion 20 wie im Beispiel nach Fig. 1 wegen ihres hohen Brennstoffgehaltes nach Abscheidung von Eisenmetallen (Magnetabscheider 22) bzw. von Nichteisenmetallen (Schwermetallen) in einer Station 42a der Presse 23 zur Erzeugung von Müllbriketts 24 zugeführt wird; oder es wird die aus dem zweiten Siebabschnitt 3 austretende Fraktion 20' einem Förderer 25 zur weiteren Verarbeitung aufgegeben.

Die aus der Siebtrommel 1 austretende Grobfraktion 26 schliesslich enthält u.a. folgende Komponenten: "Papier und Tiefdruckpapier", "Gummi und Leder", "Kunstoffe", "Metalle" und "Grobabfall". Unter dem letzteren sind weggeworfene Altgeräte, Pneus und Gebinde zu verstehen, die alle im allgemeinen einen hohen Anteil an Schwermetallen aufweisen. Da aber anderseits der Anteil des Grobabfalles 18, bezogen auf die Gesamtmenge des Kommunalmülls, gering ist, kann die Auslese von Hand aus erfolgen. Dabei wird zweckmässig auch das Tiefdruckpapier vom übrigen Papier getrennt und ebenfalls dem Container 19 zugeführt, weil Untersuchungen ergeben haben, dass dieser Anteil an Papier einen hohen Prozentsatz an Schwermetallen enthält.

Nach der Auslese übergrosser Müllbestandteile 18 gemäss der obigen Erläuterung besteht auch der Rest zum Teil noch aus brennbaren Bestandteilen (Komponente "Papier"), aus verrottbaren, grösseren Bestandteilen, aus Metallen, Kunststoffen sowie Gummi und Leder. Es ist daher möglich, aus der Grobfraktion 26 nach Abtrennung des Grobabfalles 18 noch brennbare und/oder verrottbare Substanzen zu gewinnen.

Nun wäre es theoretisch denkbar, dass auch Komponenten "Kunststoffe" oder "Gummi und Leder" mit dem Grobabfall 18 ausgelesen und in den Container 19 gebracht werden. Dies würde jedoch einem in der Praxis nicht durchführbaren manuellen Arbeitsaufwand erfordern, weshalb die vom Grobabfall 18 befreite Grobfraktion 26 bevorzugt einer selektiven Zerkleinerung unterworfen wird. Gegebenenfalls kann zur Vermeidung der Zufuhr von Eisenmetallen zur Zerkleinerung ein Magnetabscheider 22a vorgesehen sein, von dem aus das ausgelesene Eisenmetall einer Metallpresse 23a zugeführt wird.

Das anschliessende selektive Zerkleinern der verbleibenden Grobfraktion 26a kann grundsätzlich in einer Prall-, Hammer- oder Schalgmühle, aber auch in einer Trommelmühle durchgeführt werden. Dabei ist die Selektivität einer Trommelmühle etwa anders geartet als die der anderen Mühlen, wie später noch erläutert wird. Hier sei nur soviel erwähnt, dass für die Selektivität der Trommelmühle der Feuchtigkeitsgehalt des zugeführten Materials massgebende ist, und aus diesem Grunde wird für die restliche Grobfraktion 26a eine Hammermühle 27 bevorzugt. Durch die Hammermühle 27 werden harte und spröde Teile besonders zerkleinert, so dass vor allem grössere verbrennbare und/oder vorrottbare Bestandteile davon betroffen sind, wogegen weiche Komponenten, wie "Papier", "Gummi und Leder" sowie "Kunstoffe" kaum zerkleinert werden. Durch den selektiven Zerkleinerungsprozess wird also die Voraussetzung für eine weitere günstige Auslese geschaffen, und es kann in der Tat das aus der Hammermühle 27 austretende Produkt 28 bzw. 28' gewünschtenfalls unmittelbar einer Siebung zugeführt werden, wobei das durchgesiebte feine Material entweder auf die Rottemiete 17 oder in die Presse 23 wandert, wogegen das ausgeschiedene Material in einen der Container 19 bzw. 19a abgeführt werden kann. Falls aber der Zerkleinerungsprozess in der nun geschilderten Weise nur einstufig ausgeführt wird und die sich daraus ergebende Feinfraktion zur Verrottung auf die Mieten 17 gebracht werden soll, kann ohne weiteres auch eine Trommelmühle von Vorteil sein. Der Grund hiefür ergibt sich aus der späteren Erläuterung.

Gemäss der Darstellung in Fig. 6 ergeben sich am Ausgang der Hammermühle 27 wiederum zwei Möglichkeiten. Das Zerkleinerungsprodukt 28 känn, gegebenenfalls unter Zwischenschaltung eines Magnetabscheiders 22b, der Einlassöffnung 29 einer Trommelmühle 30 zugeführt werden. Bevorzugt handelt es sich dabei um eine Homogenisiertrommel, wie sie in der CH-PS 587 680 beschreiben ist, welche Trommel anschliessend mit einem Siebabschnitt 31 versehen ist. In dieser Trommelmühle 30 erfolgt die Zerkleinerung insofern selektiv, als hygroskopische Müllanteile, wie Papier, Pappe usw. rasch an Festigkeit innerhalb der etwa 30 Minuten Verweilzeit in der Trommelmühle 30 verlieren und daher zerkleinert werden. Die schon in der Hammermühle 27 kaum zerkleinerten Komponenten "Kunststoff" und "Gummi und Leder" werden auch in der Trommelmühle 30 nicht wesentlich zerkleinert, so dass von diesen Stoffen durch das Sieb 31 etwa 85% bei einer Sieböffnungsgrösse von etwa 45 mm ausgeschieden werden. Wie eingangs bereits erwählt, enthalten gerade diese Komponenten einen besonders hohen Anteil an Schwermetallen, die auf diese Weise automatisch und ohne besonderen manuellen Arbeitsaufwand ausgeschieden werden (Container 19b), wobei auch hier wiederum am Ausgang des Siebes 31 eine Magnetabscheider 22c alternativ oder kumulativ mit den anderen Magnetabschiedern 22a bzw. 22b vorgesehen sein kann.

Da also die Selketivität der Trommelmühle 30 vom Feuchtigkeitsgehalt des Materials abhängt, kann zweckmässig Feuchtigkeit aus einem Schlammreservoir 32 mittels einer Schlammpumpe 33 der Einlassöffnung 29 zugeführt werden, wobei die Trommelmühle 30 in vorteilhafter Weise gelichzeitig als Mischer wirkt. Um nun während dieses Mischprozesses nicht wiederverwertbares, d.h. brennbares und/oder verrottbares Material mit den in dieser Fraktion enthaltenen Schwermetallen zu verunreinigen, kann vor der Trommelmühle 30 eine Auslesestation 42b für die Schwermetalle vorgesehen sein, die dann als Schwermetallfraktion SM mittels eines Förderers 34 dem Container 19b, gegebenenfalls über den Magnetabscheider 22c, zugeführt wird. Das restliche Gut wandert in die Einlassöffnung 29. Da aber auch damit gerechnet werden muss, dass der Klärschlamm aus dem Behälter 32 Schwermetalle enthält, kann es zweckmässig und vorteilhaft sein, das Zerkleinerungsprodukt 28 unmittelbar der Einlassöffnung 29 zuzuführen und erst die durch das Sieb 31 ausgesiebte Fraktion 35 einer Metallauslesestation 42c zuzuführen. Während dann die Schwermetallfraktion SM wiederum dem Container 19b zur Weiterbehandlung oder Ablagerung in der Deponie zugeführt wird, geht die verrottbare Komponente auf die Rottenmiete 17. Falls jedoch beabsichtigt ist, aus dem Müll verbrennbare Briketts 25 herzustellen, so wird die Fraktion 35 aus dem Sieb 31, zweckmässig über die Auslesestation 42a und gegebenenfalls einem weiteren, nicht dargestellten Magnetabscheider der Presse 23 zugeführt, während die ausgeschiedene Schwermetallfraktion SM in einen der Container, z.B. den Container 19a, gelangt.

Aus den obigen Erläuterungen ergibt sich der Grund, warum die Vorschaltung der Hammermühle 27 vor der Trommelmühle 30 vorzuziehen ist, obwohl auch die umgekehrte Anordnung möglich wäre. Würde nämlich erst die Trommelmühle 30 anstelle der Hammermühle 27 angeordnet und die Hammermühle nachgeschaltet, so hätte die Hammermühle auch den an Sand reichen Klärschalmm mitzuverarbeiten. Zwar würde der Abrieb im gewonnenen Produkt nicht stören, weil die Verschleissteile von Hammermühlen — beispielsweise im Gegensatz zu Schneidmühlen — kaum schädliche Schwermetalle enthalten. Immerhin würde aber der erhöhte Abtrieb häufigere Reparaturen notwendig machen.

Prinzipiell ist auch eine andere Vorgangsweise denkbar, die anhand des Zerkleinerungsproduktes 28' der Hammermühle 27 erläutert werden soll, die jedoch mit erhöhtem Aufwand verbunden ist und deshalb nur in Sonderfällen von Vorteil sein kann. Dabei wird es Zerkleinerungsprodukt 28' entweder unmittelbar oder über einen Förderer 36 dem Einfülltrichter 37 eines, zweckmässig von einem Zick-Zack-Windsichter gebildeten Abscheiders zugeführt, wobei die schwereren Anteile auf den Förderer 34 gelangen, wogegen die leichteren Teile über ein Zyklon 39 oder einen anderen Abscheider aus der Abluft abgetrennt und der Einlassöffnung 29 der Trommelmühle 30 zugeführt werden. Ein Problem bei dieser Verfahrensweise liegt auch darin, dass verhältnismässig grosse Luftmengen der von einem Gebläse 40 abgegebenen Abluft gereinigt werden müssen. Hiefür kommen Erdod. Kompostifilter in Betracht, doch ist es im Rahmen des vorliegenden Verfahrens vorteilhaft, diese Abluft, insbesondere von unten her, über Zweigleitungen 41 der Rottemiete 17 zuzuführen, wobei die Abluft entweder allen Komposthaufen 17.1 bis 17.3 gemeinsam, bevorzugt jedoch in zeitlichen Abständen nacheinander über entsprechend schaltbare (nicht dargestellte) Ventile zugeführt wird. Hiezu kann bevorzugt ein Zeitsteuerwerk und/oder Regelvorrichtung vorgesehen sein, die die Umschlatung in Abhängigkeit von verschiedenen Parametern der Miete 17 vornimmt. Insbesondere spielen dabei die Parameter "Temperatur", "Kohlendioxyd-Gehalt" und/oder "Sauerstofehalt" gegebenenfalls auch "Feuchtigkiet" eine Rolle. Diese Parameter können dann mit entsprechenden Messeinrichtungen festgestellt und die Ausgangssignale dieser Messeinrichtungen der Regeleinrichtung zugeführt werden.

Im Rahmen der Erfindung sind zahireiche verschiedene Varianten möglich; vor allem sind bei einer Verwirklichung einer Anlage nach Fig. 6 nicht alle dort dargestellten Förderer erforderlich, einerseits weil nicht alle Varianten realisiert werden müssen, andererseits weil diese Förderer in Fig. 6 teilweise nur der Anschaulichkeit und aus Gründen der besseren Verständlichkiet der Darstellung eingezeichnet sind. Auch können verschiedene, in Fig. 6 mehrfach dargestellte Einrichtungen, wie die Metallauslesestationen 42 oder die Container 19 bzw. die Rottenmieten 17 wenigstens zum Teil zu einer einzigen Einrichtung zusammengefasst sein. Aus den obigen Erläuterungen geht auch hervor, dass der Zerkleinerungsprozess gegebenenfalls einstufig mit Hilfe der Hammermühle 27 oder der Trommelmühle 30 allein ausgeführt werden kann, obwohl die dargestellte zweistufige Zerkleinerung, insbesondere wegen der auf unterschiedlichen Kriterien beruhenden Selektivität bevorzugt ist.

Aus der obigen Beschreibung ergibt sich auch, dass erfindungsgemäss ein Verfahren zum Ausscheiden wenigstens einer Fraktion, insbesondere einer Schadstoffe, wie Schwermetalle, enthaltenden Fraktion verwendet wird, bei dem im Gegensatz zu den bischerigen Methoden, bei denen man versuchte, die Schadstoffe durch relativ grosse Mengen, oft teurer Chemikalien herauszulösen oder zu binden, zunächst eine Analyse durchgeführt wird, welche Träger-Komponenten für diese Schadstoffe verantwortlich sind, und hierauf staff der Schadstoffe selbst die leichter umittelbar nach Auslieferung durch sammelfahlzeuge selektiert werden. Hier wird also eine statistische Selektionsmethode angewandt, die bei geringerem Aufwand zu einem sicheren Ergebnis führt.

**Patentansprüche**

1. Verfahren zum Ausscheiden wenigstens einer Fraktion aus Müll, bei dem der Müll (a) einem ersten Siebvorgang zum Ausscheiden einer feinen Fraktion zugeführt wird, sodann (b) einem zweiten Siebvorgang zum Ausscheiden einer größeren Fraktion und zum Ausscheiden von übergrossen Müllteilen zugeführt wird und (c) beide Siebvorgänge in einer in wenigstens zwei Siebabschnitte unterteilten, rotierenden Siebtrommel erfolgen, dadurch gekennzeichnet, dass aufgrund des Resultates einer Müllanalyse zum Feststellen der die auszuscheidende Fraktion enthaltenden Trägerkomponente des Mülls eine Selektion dieser Trägerkomponente unmittelbar nach Auslieferung durch Sammelfahrzeuge ohne Vorbehandlung des Mülls erfolgt.

2. Verfahren nach Anspruch 1, dadurch gekennzeichnet, dass der Müll im ersten Siebabschnitt wenigstens teilweise zerrissen wird.

3. Verfahren nach Anspruch 1 oder 2, dadurch gekennzeichnet, dass während des ersten Siebvorganges eine Fraktion mit einer maximalen Teilchengrösse von 15 mm ausgesiebt wird.

4. Verfahren nach einem der Ansprüche 1 bis 3, dadurch gekennzeichnet, dass in an sich bekannter Weise Teile von einer Grösse unter 80 mm ausgesiebt werden, wobei vorzugsweise eine Fraktion mit einer Teilchengrösse von 40 bis 80 mm ausgesiebt wird.

5. Verfahren nach einem der Ansprüche 1 bis 4, dadurch gekennzeichnet, dass während des zweiten Siebvorganges Teile bis zu einer Grösse zwischen 120 und 200 mm ausgesiebt werden, und dass vorzugsweise die dabei hindurchgefallene Fraktions, insbesondere nach vorherigem Pressen, einer Verbrennung zugeführt wird.

6. Verfahren nach einem der Ansprüche 1 bis 5, dadurch gekennzeichnet, dass die aus dem zweiten Siebvorgang ausgeschiedene Grobfraktion nachfolgend, vorzugsweise nach Auslesen von Grossabfällen, wie Altgeräten, Gebinden, Batterien od. dgl. durch Schlagen und/oder Prallen selektiv zerkleinert wird, und dass insbesondere das selektive Zerkleinern in zwei aufeinanderfolgenden Stufen erfolgt, vorzugsweise zuerst in einer Hammer- oder Schlagmühle, anschliessend — zweckmässig nach Abtrennen von Eisenteilen in einer Trommelmühle, gegebenenfalls unter Zusatz von Feuchtigkeit.

7. Verfahren nach Anspruch 6, dadurch gekennzeichnet, dass nach der selektiven Zerkleinerung das erhaltene Gut in wenigstens zwei Fraktionen getrennt, vorzugsweise wenigstens nach der Trommelmühle, gesiebt wird, und dass bevorzugt das Trennen in Fraktionen, insbesondere nach der Hammermühle durch Windsichten, vorzugsweise in einem Zick-Zack-Windsichter, erfolgt, dem zweckmässig eine Erd-, Kompost- oder Mietenfilter für die Abluft nachgeschaltet ist.

8. Vorrichtung zur Durchführung des Verfahrens nach einem der Ansprüche 1 bis 7, mit einer antreibbaren, einen ersten und einen zweiten Siebabschnitt unterschiedlicher Lochgrössen aufweisenden Siebtrommel, wobei im ersten Siebabschnitt — gesehen in Materialdurchflussrichtung — die Lochgrössen geringer als im zweiten ist und im ersten Siebabschnitt ein Lochsieb aus wenigstens einer mit Löchern versehen Platte vorgesehen ist, dadurch gekennzeichnet, dass das Lochsieb (10) mit dem ersten Siebabschnitt (2) endet, und dass im zweiten Siebabschnitt die Löcher durch in Längs- und in Umfangsrichtung der Trommel (1) verlaufende Stege (6 bzw. 7) begrenzt sind.

9. Verfahren nach Anspruch 8, dadurch gekennzeichnet, dass die Sieböffnungen des zweiten Siebabschnittes veränderbar sind, dass bevorzugt der zweite Siebabschnitt aus etwa parallel zur Drehachse verlaufenden, auf dem Umfang des Siebmantels verteilten Trägerelementen (6) besteht, an deren Innenseite etwa im Umfangsrichtung mehrere zueinander parallele segmentartige Siebelemente (7) lösbar befestigt sind, dass insbesondere auf den segmentartigen Siebelementen (7) etwa im Bereich der Trägerelemente (6) gegen die Drehachse gerichtet Abweiselemente (8) zum Verhindern von Verstopfungen der Sieböffnungen befestigt sind, dass gegebenenfalls die Trägerelemente (6) auf der Innenseite mit in Abständen angeordneten Gewindelöchern (9) versehen sind, an denen die Siebelemente (7) je nach gewünschter Sieböffnung wahlweise mittels Schrauben fixierbar sind, dass vorzugsweise die Siebplatte (10) des ersten Siebabschnittes auf den verlängerten Trägerelementen befestigt ist, und dass zweckmässig der Lochdurchmesser des ersten Siebabschnittes kleiner als 80 mm, z.B. 40 mm, ist.

10. Vorrichtung nach Anspruch 9, dadurch gekennzeichnet, dass der Lochdurchmesser des ersten Siebabschnittes etwa 15 mm beträgt.

**Revendications**

1. Procédé en vue de séparer au moins une fraction d'ordures, procédé dans lequel les ordures (a) sont acheminées à un premier processus de tamisage en vue de séparer une fraction fine, puis (b) elles sont acheminées à un deuxième processus de tamisage en vue de séparer une fraction plus grosse et également afin de séparer des fractions surdimensionnées d'ordures et (c) les deux processus de tamisage ont lieu dans un tambour rotatif de tamisage subdivisé en au moins deux sections de tamisage, caractérisé en ce que, sur la base du résultat d'une analyse des ordures en vue de déterminer le composant support de ces dernières qui contient la fraction à séparer, on effectue une sélection de ce composant support aussitôt aprés livraison par des collecteurs, sans traitement préalable des ordures.

2. Procédé selon la revendication 1, caractérisé en ce qu'on rompt au moins partiellement les ordures dans la première section de tamisage.

3. Procédé selon la revendication 1 ou 2, caractérisé en ce que, au cours du premier processus de tamisage, on sépare une fraction en particules d'une granularité maximale de 15 mm.

4. Procédé selon une des revendications 1 à 3, caractérisé en ce que, de façon connue en soi, on tamise des fractions d'une granularité inférieure à 80 mm en séparant, de préférence, une fraction en particules d'une granularité de 40 à 80 mm.

5. Procédé selon une des revendications 1 à 4, caractérisé en ce que, au cours du deuxième processus de tamisage, on tamise des fractions ayant une granularité comprise entre 120 et 200 mm tandis que, de préférence, et, en particulier, après un pressage préalable, les fractions passant au tamis sont acheminées à une combustion.

6. Procédé selon une des revendications 1 à 5, caractérisé en ce que, de préférence, après triage des déchets de grandes dimensions tels que des appareil anciens, des fûts, des batterie ou analogues, la fraction grossière séparé dans le deuxième processus de tamisage est broyée sélectivement par des chocs et/ou par percussion et, en particulier, le broyage sélectif a lieu en deux étapes successives, de préférence, tout d'abord dans un broyeur à marteaux ou à chocs puis, avantageusement après séparation des éléments ferreux, dans un broyeur à tambour en ajoutant éventuellement de l'humidité.

7. Procédé selon la revendication 6, caractérisé en ce que, après le broyage sélectif, le produit obtenu est séparé en au moins deux fractions et est tamisé, de préférence, au moins après le broyeur à tambour tandis que, de préférence, la séparation en fractions a lieu, en particulier, après le broyeur à marteaux par élutriation, de préférence, dans un cyclone en zigzag à la suite duquel est avantageusement monté un filtre à terre, à compost ou à pourriture pour l'air évacué.

8. Dispositif pour la réalisation du procédé selon une des revendications 1 à 7, ce dispositif comportant un tambour de tamisage pouvant être entraîne et ayant une première et une deuxième section de tamisage avec des trous de dimensions différentes et, dans la première section de tamisage (vu dans le sens d'écoulement de la matière), les dimensions des trous sont inférieures à celles de la deuxième section et, dans la première section de tamisage, on prévoit un tamis perforé constitué d'au moins une plaque pourvue de trous, caractérisé en ce que le tamis perforé (10) se termine avec la première section de tamisage (2) tandis que, dans la deuxième section de tamisage, les trous sont délimités par des nervures (6 ou 7) s'étendant dans le sens longitudinal et dans le sens périphérique du tambour (1).

9. Dispositif selon la revendication 8, caractérisé en ce que les ouvertures de la deuxième section de tamisage peuvent être modifiées et, de préférence, la deuxième section de tamisage est constituée d'éléments supports (6) s'étendant parallèlement à l'axe de rotation et répartis sur la périphérie de l'enveloppe de tamisage, éléments sur la face intérieure desquels sont fixés, de manière amovible, plusieurs éléments de tamisage en forme de segments s'étendant parallèlement l'un à l'autre à peu près dans le sens périphérique tandis que, en particulier, sur les éléments de tamisage en forme de segments (7), notamment dans la zone des éléments supports (6), des éléments déflecteurs (8) dirigés contre l'axe de rotation sont fixés pour empêcher les obstructions des ouvertures de tamisage et éventuellement, les éléments supports (6) sont pourvus, sur leur face intérieur, de trous filetés espacés (9) sur lesquels, selon l'ouverture de tamisage désirée, les éléments de tamisage (7) peuvent être fixés sélectivement au moyen de vis et, de préférence, la plaque de tamisage (10) de la première section de tamisage est fixée sur les éléments support allongés tandis que, avantageusement, le diamètre des trous de la première section de tamisage est inférieur à 80 mm, par exemple, de 40 mm.

10. Dispositif selon la revendication 9, caractérisé en ce que le diamètre des trous de la première section de tamisage est d'environ 15 mm.

**Claims**

1. A method for separating at least one fraction from waste material, in which the waste material (a) is fed to a first sieving step for separating a fine fraction and (b) is then fed to a second sieving step for separating a coarser fraction and oversized parts of the waste material, wherein (c) both sieving steps are effected in a rotating sieve drum subdivided into at least two sieving sections, characterized in that, on the basis of the result of an analysis of the waste material for determining the carrier component of the waste material which contains the fraction to be separated, a selection of this carrier component is effected immediately after delivery by collection vehicles without any previous treatment of the waste material.

2. A method as claimed in claim 1, characterized in that the waste material is at least partially teared within the first sieving section.

3. A method as claimed in claim 1 or 2, characterized in that a fraction with a maximum particle size of 15 mm is sifted out during the first sieving step.

4. A method as claimed in any one of claims 1 to 3, characterized in that particles of a size below 80 mm are sifted out in a manner known per se, thereby preferably sifting out a fraction with a particle size of 40 to 80 mm.

5. A method as claimed in any one of claims 1 to 4, characterized in that particles up to a size between 120 and 200 mm are sifted out during the second sieving step, and that preferably the fraction dropped through in this step is subjected to combustion, particularly after being previously pressed.

6. A method as claimed in any one of claims 1 to 5, characterized in that the coarse fraction, tailed over in the second sieving step, is subsequently selectively comminuted by beating and/or impacting, preferably after separating oversized waste material, such as used apparatuses, containers, batteries or the like, and that particularly the selective comminution is effected in two subsequent steps, preferably first in a hammer mill or beater mill and subsequently in a drum mill, suitably after the separation of iron parts, in cases under admixture of moisture.

7. A method as claimed in claim 6, characterized in that the material obtained after the selective comminution is separated into at least two fractions, preferably is sifted at least after the drum mill, and that, with preference, the separation into fractions is effected by air classification, preferably in a zig-zag air classifier, particularly after the hammer mill, a soil filter, compost filter or a heap filter for the exhaust air being suitably postponed.

8. An apparatus for carrying out the method as claimed in any one of claims 1 to 7, comprising a sifting drum to be driven and including a first sieving section and a second sieving section of different aperture size, in the first sieving section — when seen in the direction of the flow of material — the perforation sizes being smaller than in the second sieving section, and a perforated sieve of at least one punch perforated plate being provided in the first sieving section, characterized in that the perforated sieve (10) ends with the first sieving section (2), and that the apertures of the second sieving section are defined by stays (6 or 7) extending in longitudinal and peripheral direction of the drum (1).

9. An apparatus as claimed in claim 8, characterized in that the sieve apertures of the second sieving section are variable, that, with preference, the second sieving section consists of carrier elements (6) extending substantially parallely to the axis of rotation and being distributed over the circumference of the casing, a plurality of segment-like sieve elements (7), parallel to each other, being releasably mounted substantially in peripheral direction on the inner side of said carrier elements (6), that particularly deflector elements (8) are mounted on the segment-like sieve elements (7) approximately in the region of the carrier elements (8) for preventing clogging of the sieve apertures, that, in cases, the carrier elements (6) are provided with spaced tap holes (9) on their inner side, onto which the sieve elements (7), in accordance with the desired size of the sieve apertures, may selectively fixed, that preferably the sieve plate (10) of the first sieving section is mounted on the prolonged carrier elements, and that suitably the perforation diameter of the first sieving section is smaller than 80 mm, e.g. amounts to 40 mm.

10. An apparatus as claimed in claim 9, characterized in that the perforation diameter of the first sieving section amounts approximately to 15 mm.

Fig. 1

Fig. 2

Fig. 3

Fig.4

Fig.5

Fig.6